(19) Europäisches Patentamt
European Patent Office
Office européen des brevets

(11) Publication number: 0 247 870 A1

(12) # EUROPEAN PATENT APPLICATION

(21) Application number: 87304724.5

(22) Date of filing: 28.05.87

(51) Int. Cl.$^4$: C 08 L 59/04
C 08 L 75/04

(30) Priority: 29.05.86 US 868841

(43) Date of publication of application:
02.12.87 Bulletin 87/49

(84) Designated Contracting States:
AT BE CH DE ES FR GB GR IT LI LU NL SE

(71) Applicant: CELANESE CORPORATION
1211 Avenue of the Americas
New York New York 10036 (US)

(72) Inventor: Kusumgar, Rajal
16 Garnet Terrace
Livingstone New Jersey (US)

O'Brien, David P.
735 Sheridan Avenue
Plainfield New Jersey (US)

(74) Representative: De Minvielle-Devaux, Ian Benedict Peter et al
CARPMAELS & RANSFORD 43, Bloomsbury Square
London WC1A 2RA (GB)

(54) **Toughened polyacetal polymer with improved wear resistance.**

(57) A high impact polyacetal resin composition is provided with vastly improved wear properties by the inclusion of small amounts of polydiorganosiloxane. The high impact strength polyacetal resin composition is provided from a blend of oxymethylene polymer and an elastomeric polyurethane.

EP 0 247 870 A1

## Description

# TOUGHENED POLYACETAL POLYMER WITH IMPROVED WEAR RESISTANCE

## BACKGROUND OF THE INVENTION

This invention relates to high impact polyacetal resin compositions and molded articles made therefrom having improved wear properties. In particular, the invention is concerned with molded articles made from a novel high impact polyacetal resin composition useful in low wear applications such as for the replacement of metals or improving plastic to metal wear performance.

Oxymethylene polymers, having recurring $-CH_2O-$ units have been known for many years. These polymers may be prepared by the polymerization of anhydrous formaldehyde or by the polymerization of trioxane which is a cyclic trimer of formaldehyde.

The usefulness of oxymethylene polymers in molding compositions has also been known for years. For example, U.S. Patent No. 3,275,604 discloses a moldable oxymethylene copolymer comprising oxymethylene groups and oxyethylene groups, with said oxyethylene groups having a $-CH_2OR-$ group pendant therefrom, which may be prepared by polymerizing a source of oxymethylene units such as trioxane with a glycidal ether.

For certain molding applications, molding compositions that impart good impact strength to articles molded therefrom are highly desirable. Oxymethylene polymer molding compositions having improved impact strength have been manufactured by blending 10 and 20% by weight of an elastomeric polyurethane with an oxymethylene copolymer. The addition of polyurethane to polyacetal resins imparts improved toughness to the polyacetal composition. However, along with the improved toughness of polyacetal and polyurethane blends comes a marked decrease in interfacial wear properties relative to the polyacetal.

Low wear polyacetal molding compositions have been prepared by adding thereto polydiorganosiloxane. A three component low wear oxymethylene molding composition is disclosed in copending, commonly assigned U.S. Patent Application Serial No. 791,386, filed October 25, 1985. The low wear polyacetal molding composition comprises an oxymethylene copolymer, an antistatic agent such as disclosed in U.S. Patent No. 4,274,986 and a polydiorganosiloxane. The three component blend has improved wear properties over a blend comprising an oxymethylene copolymer containing the polydiorganosiloxane and a blend comprising the oxymethylene copolymer and the aforementioned antistatic agent.

U.S. Patent No. 4,472,556 discloses a method for enhancing at least one of the mechanical properties of a partially crystalline thermoplastic by forming a dispersion of a polydiorganosiloxane within the thermoplastic, and extending the resultant dispersion. Among a large list of examples of partially crystalline thermoplastics is disclosed polyoxides, such as polyoxymethylene.

U.S. Patent No. 3,491,048 discloses thermoplastic resinous compositions characterized by improved melt flow which comprise an oxymethylene polymer having incorporated therein a silicone oil.

An object of the present invention is to improve the low wear properties of polyoxymethylene polymers, in particular, high impact polyoxymethylene blends containing polyurethane.

## SUMMARY OF THE INVENTION

The present invention is based on discovery that by adding small amounts of polydiorganosiloxane to high impact oxymethylene polymers having contained therein an elastomeric polyurethane, vastly improved and unexpected wear properties are imparted to the polymer blend.

## BRIEF DESCRIPTION OF THE DRAWING

The Figure is a graph depicting the results of a time to wear failure study of polyoxymethylene polymers within and out of the scope of the present invention.

## DETAILED DESCRIPTION OF THE INVENTION

### OXYMETHYLENE POLYMER

The oxymethylene polymer used in the molding composition of the present invention is well known in the art. The polymers are characterized as having recurring oxymethylene groups or units, i.e., $-CH_2O-$. The term oxymethylene polymer as used herein is intended to include any oxymethylene polymer having $-CH_2O-$ groups comprising at least about 50 percent of the recurring units, for example, homopolymer, copolymers, terpolymers and the like.

Typically, the homopolymers are prepared by the polymerization of anhydrous formaldehyde or by the polymerization of trioxane which is a cyclic trimer of formaldehyde. For example, high molecular weight polyoxymethylenes have been prepared by polymerizing trioxane in the presence of certain fluoride catalysts such as antimony fluoride and may also be prepared in high yields and at rapid reaction rates by the use of catalysts comprising boron fluoride coordinate complexes with organic compounds, as described in application Serial No. 691,143, filed October 21, 1957, by Hudgin and Berardinelli.

The homopolymers are usually stabilized against thermal degradation by end-capping or the incorporation therein of stabilizer compounds such as described in U.S. Patent No. 3,133,896 to Dolce and Berardinelli.

Oxymethylene polymers that are particularly adapted for use in the molding compositions of the present invention are oxymethlene copolymers, which may be prepared as described in U.S. Patent No. 3,027,352 of Walling et al by copolymerizing, for example, trioxane with any of various cyclic ethers having at least two adjacent carbon atoms, e.g., ethylene oxide, dioxolane, and the like.

Especially suitable oxymethylene copolymers which may be used in the molding compositions of

the present invention usually process a relatively high level of polymer crystallinity, i.e., about 70 to 80 percent. These preferred oxymethylene copolymers have repeating units which consist essentially of (a) $-OCH_2-$ groups interspersed with (b) groups represented by the general formula:

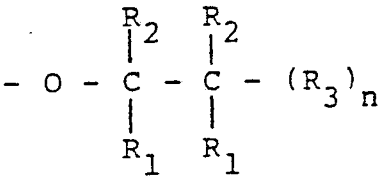

wherein each $R_1$ and $R_2$ is selected from the group consisting of hydrogen, lower alkyl and halogen-substituted lower alkyl radicals, each $R_3$ is selected from the group consisting of methylene, oxymethylene, lower alkyl and haloalkyl-substituted methylene, and lower alkyl and haloalkyl-sutstituted oxymethylene radicals, and n is an integer from zero to three.

Each lower alkyl radical preferably has from one to two carbon atoms, inclusive. The $-OCH_2-$ units of (a) constitute from about 85 to about 99.9 percent of the recurring units. The units of (b) may be incorporated into the copolymer during the step of copolymerization to produce the copolymer by the opening of the ring of a cyclic ether having adjacent carbon atoms, i.e., by the breaking of an oxygen-to-carbon linkage.

Copolymers of the desired structure may be prepared by polymerizing trioxane together with from about 0.1 to about 15 mole percent of a cyclic ether having at least two adjacent carbon atoms, preferably in the presence of a catalyst such as a Lewis acid (e.g, $BF_3$, $PF_5$, and the like) or other acids (e.g., $HClO_4$, 1% $H_2SO_4$, and the like).

In general, the cyclic ethers employed in making the preferred oxymethylene copolymers are those represented by the general formula:

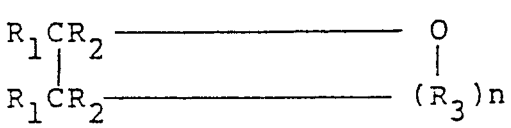

wherein each $R_1$ and $R_2$ is selected from the group consisting of hydrogen, lower alkyl and halogen-substituted lower alkyl radicals, and each $R_3$ is selected from the group consisting of methylene, oxymethylene, lower alkyl and haloalkyl-substituted methylene, and lower alkyl and haloalkyl-substituted oxymethylene radicals, and n is an integer from zero to three inclusive. Each lower alkyl radical preferably has from one to two carbon atoms, inclusive.

The preferred cyclic ethers used in the preparation of the preferred oxymethylene copolymers are ethylene oxide and 1,3-dioxolane, which may be represented by the formula:

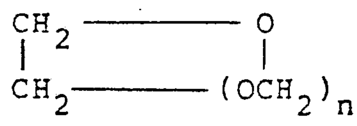

wherein n represents an integer from zero to two, inclusive. Other cyclic ethers that may be employed are 1,3-dioxane, trimethylene oxide, 1,2-propylene oxide, 1,2-butylene oxide, 1,2-butylene oxide and 2,2-di-(chloromethyl)-1,3-propylene oxide.

The preferred catalyst used in preparing the desired oxymethylene copolymers is the aforementioned boron trifluoride as discussed in the previously identified Walling et al patent. Reference is made to this patent for further information concerning the polymerization conditions, amount of catalyst employed, and the like.

The oxymethylene copolymers produced from the preferred cyclic ethers have a structure composed substantially of oxymethylene and oxyethylene groups in a ratio of from about 6 to 1 to about 1000 to 1.

The oxymethylene copolymers that are preferably present in the molding compositions of the present invention are thermoplastic materials having a melting point of at least 150°C, and normally are millable or processable at a temperature of from about 180°C to about 200°C. They have a number average molecular weight of at least 10,000. The preferred oxymethylene copolymers have an inherent viscosity of at least 1.0 (measured at 60°C in a 0.1 weight percent solution in p-chlorophenol containing 2 weight percent of alphapinene).

The oxymethylene copolymer component of the molding composition of this invention preferably is an oxymethylene copolymer that has been preliminarily stabilized to a substantial degree. Such stabilizing technique may take the form of stabilization by degradation of the molecular ends of the polymer chain to a point where a relatively stable carbon-to-carbon linkage exists at each end. For example, such degradation may be effected by hydrolysis as disclosed in U.S. Patent No. 3,219,623 to Berardinelli.

If desired, the oxymethylene copolymer may be encapped by techniques known to those skilled in the art. A preferred end-capping technique is accomplished by acetylation with acetic anhydride in the presence of sodium acetate catalyst. A preferred oxymethylene copolymer is commercially availabe from Celanese Corporation under the designation CELCON® acetal copolymer, and especially preferred is CELCON® M90 which has a melt index of about 9.0g/10 min. when tested in accordance with ASTM D1238-82.

With respect to the oxymethylene terpolymer, it may be prepared, for example, by reacting trioxane and a cyclic ether and/or cyclic acetal such as in the preparation of the oxymethylene copolymer, with a third monomer which is a bifunctional compound such as a diglycide of the formula:

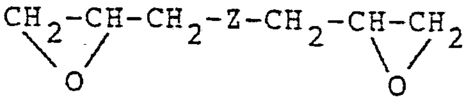

wherein Z represents a carbon-to-carbon bond, an oxygen atom, an oxy-alkoxy of I to 8 carbon atoms, preferably 2 to 4 carbon atoms, and which may be an oxycycloalkoxy of 4 to 8 carbon atoms, or an oxy-poly(lower alkoxy), preferably of 2 to 4 recurring groups each with I to 2 carbon atoms, for example, ethylene diglycide, diglycidyl ether and diethers of 2 mols of glycide and I mol of formaldehyde, dioxane or trioxane, or diethers of 2 mols of glycide and I mol of an aliphatic diol with 2 to 8 carbon atoms, advantageously 2 to 4 carbon atoms, or a cycloaliphatic diol with 4 to 8 carbon atoms.

Examples of suitable bifunctional compounds include the diglycidyl ethers of ethylene glycol, I-4-butanediol, I,3-butanediol, cyclobutane-I,3-diol, I,2-propane-diol, cyclohexane-I, 4-diol and 2-dimethyl-4-dimethyl-cyclobutane-I,3-diol, with butanediol diglycidyl ethers being most preferred.

Generally, in preparing the terpolymer of trioxane, cyclic ether and/or cyclic acetal and at least one bifunctional diglycide compound, a ratio of from 99.89 to 89.0 weight percent trioxane, 0.I to I0 weight percent of the cyclic ether and/or cyclic acetal, and 0.0I to I weight percent of the bifunctional compound is preferred, with the percentage figures being based on the total weight of monomers used in forming the terpolymer. The terpolymers thus obtained are characterized as being essentially white and having a particularly good extrudability.

The polymerization of the terpolymer may be carried out according to known methods, that is in substance, solution or suspension, while using the above-mentioned quantitative proportions of the termonomers. As solvents, there may advantageously be used inert aliphatic or aromatic hydrocarbons halogenated hydrocarbons or ethers.

In some cases, it may be advantageous to use the following quantitative proportions: 99.85 to 89.5 weight percent of trioxane, 0.I to I0 weight percent of cyclic ether or cyclic acetal, and 0.05 to 0.5 weight percent of diglycidyl ether, the percentage figures being calculated on the total weight of the monomer mixture used for preparing the terpolymer.

The trioxane-based terpolymer polymerization is advantageously carried out at temperatures at which trioxane does not crystallize out, that is, that a temperature within the range of -50°C to +I00°C, depending on the solvent used, and in the absence of a solvent at a temperature within the range of +20°C to +I00°C.

As trioxane-based terpolymer polymerization catalyst, all substances may be used which are capable of initiating a cationic polymerization, for example, organic or inorganic acids, acid halides and, preferably, Lewis acids. Of the latter, boron fluoride and its complex compounds, for example, etherates of boron fluoride, are advantageously used. Diazonium fluoroborates are particularly advantageous.

The concentration of the catalyst may vary within the limits depending on the nature of the catalyst and on the intended molecular weight of the terpolymer. The concentration of the catalyst may be within the range of 0.001 to 1 weight percent, calculated on the total monomer mixture, and is advantageously within the range of 0.0001 to 0.1 weight percent.

Since the catalysts tend to decompose the terpolymer, the catalyst is advantageously neutralized immediately after the polymerization, for example, with ammonia or methanolic or acetonic amine solutions.

The unstable terminal hemiacetal groups may be removed from the terpolymer in the same manner as known for other oxymethylene polymers, Advantageously, the terpolymer is suspended in aqueous ammonia at temperature within the range of I00°C to 200°C, and if desired, in the presence of a swelling agent such as methanol or n-propanol. Alternatively, the terpolymer is dissolved in an alkaline medium at temperatures above I00°C and subsequently reprecipitated. Examples of suitable solvents are benzyl alcohol, ethylene glycol monoethyl ether or a mixture of 60 weight percent methanol and 40 weight percent water. Examples of suitable compounds having an alkaline reaction are ammonia and aliphatic amines.

It is also possible to thermally stabilize the terminal groups of the terpolymers in the absence of a solvent in the melt in the presence of a stabilizer.

Alternatively, the terpolymer can be subjected to heterogeneous hydrolysis wherein water, with or without a catalyst, e.g., an aliphatic or aromatic amine, is added to a melt of the terpolymer in an amount ranging from about I to about 50 percent based on the weight of the terpolymer. The terpolymer mixture is maintained at a temperature in the range of from about I70°C to 250°C for a specified period of time, and then washed with water and dried or centrifuged.

A preferred oxymethylene terpolymer is commercially available from Celanese Corporation under the designation U10, and is a butanediol diglycidyl ether/ethylene oxide/trioxane terpolymer containing about 0.05 weight percent, 2.0 weight percent, and 97.95 weight percent of each component, respectively.

It is within the ambit of the present invention to use oxymethylene polymers that include, if desired, plasticizers, formaldehyde scavengers, mold lubricants, antioxidants, fillers, colorants, reinforcing agents, light stabilizers, pigments, other stabilizers, and the like, so long as additives do not materially effect the desired properties including enhancement of impact strength of the resulting molding composition and the articles molded therefrom.

Suitable formaldehyde scavengers include cyanoguanidine, melamines, polyamides, amine-substituted triazines, amidines, ureas, hydroxyl salts of calcium, magnesium, and the like, salts of carboxylic acids, and metal oxides and hydroxides. Cyanoguanidine is the preferred formaldehyde scavenger. Suitable mold lubricants include alkylene bisstearamide, long-chain amides, waxes, oils, and

polyether glycides. The preferred mold lubricant is commercially available from Glyco Chemical, Inc. under the designation Acrawax C and is alkylene bisstearamide. The preferred antioxidants are hindered bisphenols. Especially preferred is l,6-hexamethylene bis-(3,5-di-t-butyl-4-hydroxyhydrocinnamate), commercially available from Ciba-Geigy Corp. under the designation Irganox 259.

ELASTOMERIC POLYURETHANE

Elastomeric polyurethanes which are suitable for improving the impact strength of the oxymethylene polymer composition are those which have been prepared from polyester polyols, polyether polyols such as polyethylene-glycol ethers, polypropyleneglycol ethers or polyacetals having free hydroxyl end groups and polyisocyanates, in particular diisocyanates, using chain-extending agents such as low molecular weight polyols, preferably glycols.

The polymeric polyols and polyol extenders which can be used are those conventionally employed in the art for the preparation of such elastomers. The polymeric polyols are preferably polymeric diols which advantageously have molecular weights in the range of 400 to 4000 and preferably within the range of about 500 to about 3000. Illustrative of polymeric diols are polyester diols and polyether diols and mixtures thereof having molecular weights within the above range. The polyester diols include the essentially linear polymeric diols which are obtained by esterification of an aliphatic or aromatic dibasic acid or anhydride with a glycol. Preferably the glycol is employed in excess of the stoichiometric proportion with respect to the acid or anhydride in order to ensure that the polyesters are hydroxyl-terminated. Representative dicarboxylic acids (or their anhydrides) employed in the preparation of the polyester diols are adipic, succinic, pimelic, suberic, azelaic, sebacic, terephthalic, phthalic, and the like acids or their anhydrides or mixtures of two or more of said acids or anhydrides. Adipic acid is the preferred acid. Representative glycols employed in the preparation of the polyester diols are the straight chain aliphatic glycols containing from 2 to l0 carbon atoms, inclusive, such as ethylene glycol, propane-l,3-diol, butane-l,4-diol, 2-butene-l,4-diol, hexane-l,6-diol, octane-l,8-diol, decane-l,l0-diol, and the like, or mixtures of two or more such glycols.

In addition to the above type of polyester diols, there can also be used the polycaprolactone diols which are prepared by polymerizing the appropriate caprolactone with the appropriate difunctional initiator, such as in aliphatic glycol as exemplified above or an alkanolamine such as ethanolamine, propanolamine, butanolamine, and the like. Such procedures and products are well-known in the art; see, for example, U.S. Patent No. 2,9l4,556. A particularly preferred polyester diol is that obtained by initiating the polymerization of ε-caprolactone with l,4-butanediol.

The polyether polyols employed in the preparation of the polyurethane elastomers of the invention include the polyether glycols having molecular weights in the above defined range and prepared by reacting ethylene oxide, propylene oxide, butylene oxide, or mixtures thereof with water or with diols such as ethylene glycol, l,2-propylene glycol, 1,3-propanediol l,4-butanediol, 2,3-butanediol, 1,5-pentanediol, 1,2-hexanediol, diethanolamine resorcinol, catechol, bis(p-hydroxyphenyl) methane, diethylene glycol, dipropylene glycol, and the like.

The extenders which are employed in preparing the polyurethane elastomers of the invention can be any of the diol extenders commonly employed in the art. Illustrative of diol extenders are aliphatic diols, advantageously containing from 2 to 6 carbons atoms, inclusive, such as ethylene glycol, l,3-propylene glycol, l,2-propylene glycol, l,4-butanediol, l,2-hexanediol, neopentyl glycol, and the like; and dihydroxyalkylated aromatic compounds such as the bis (2-hydroxyethyl)ethers of hydroquinone and resorcinol; p-xylene-a,a'-diol; the bis(2-hydroxyethyl)ether of p-xylene-a,a'-diol; m-xylene-a,a'-diol and the bis(2-hydroxyethyl)ether thereof.

The organic diisocyanate employed in the process of the invention can be any of those commonly employed in the preparation of polyurethane elastomers. Illustrative of said diisocyanates are 2,4-tolylenediisocyanate, 2,6-tolylene diisocyanate, 4,4′-methylenebis(phenyl isocyanate), 3,3′-dimethyl-4,4′-diisocyanatodiphenyl, 3,3′-dimethoxy-4,4′-diisocyanatodiphenyl, 3,3′-dichloro-4,4′-diisocyanatodiphenyl, β,β′-diisocyanato-l,4-diethylbenzene, l,5-naphthalene diisocyanate, l,4-phenylene diisocyanate, and the like, including mixtures of two or more of the above diisocyanates. The preferred diisocyanate is 4,4′-methylenebis (phenyl isocyanate).

Regardless of the particular polyurethane reaction method which is chosen, the hydroxyl components (i.e., the polyester or polyether polyol and the polyol extender) and the diisocyanate are used such that the overall ratio of isocyanate equivalents or groups to total hydroxyl equivalents or groups is within the range of about l:l to about 1.08:1.0, and preferably is within the range of about l.02:l.0 to about 1.07:1.0. The most preferred ratio of isocyante (NCO) groups to total hydroxyl (OH) groups is within the range of from about 1.03:1.0 to about l.06:l.0.

The term equivalent(s) as used with respect to the polyurethane preparation in the present specification and claims is based on the hydroxyl and isocyanate groups of the reactants.

The polyurethanes which are useful in the present invention can be prepared by processes which are conventional in the art for the synthesis of thermoplastic polyurethanes. Illustrative of such processes are those described in U.S. Patent Nos. 3,493,364: 4,l69,l96: 4,202,957: and 3,642,964. Such processes include the one-shot procedure in which all of the reactants are brought together simultaneously, and the prepolymer procedure in which the isocyanate is reacted with the polyester or polyether glycol in a first-step and the isocyanate-terminated prepolymer so produced is subsequently reacted with the diol extender. The one-shot process also includes the process in which the diisocyanate has been converted to a quasiprepolymer by reaction with a minor amount (i.e., less than about l0% on an equivalent basis) of the glycol prior to carrying out the polyurethane-forming reaction.

If desired, the polyurethanes of the present invention can have incorporated in them, at any appropriate state of preparation, additives such as pigments, fillers, lubricants, stabilizers, antioxidants, coloring agents, fire retardants, and the like, which are commonly used in conjunction with polyurethane elastomers.

PREPARATION OF MOLDING COMPOSITIONS OF THE PRESENT INVENTION

The high impact oxymethylene polymer molding composition of the present invention comprise from about 1 to about 50 weight percent, preferably from about 10 to about 50 weight percent, and most preferably from about 20 to about 40 weight percent of the elastomeric polyurethane. Correspondingly, from about 50 to about 99 weight percent, preferably from about 50 to about 90 weight percent, and most preferably from about 60 to about 80 weight percent of the oxymethylene polymer is present. The above weight percents are based on the total weight of the molding composition.

The molding compositions may suitably be prepared by any conventional procedure that will result in an intimate blend or mixture of the components. Preferably, dry or melt blending procedures and equipment are used. For example, the polyurethane (in the form of pellets, chips, or granules) can be dry mixed with the oxymethylene polymer (in the form of pellets, chips, granules or powder) typically at room temperatures, and the resulting mixture melt blended in any conventional type extrusion equipment, which is heated to a temperature of from about l80°C to about 230°C, and preferably from about 185°C to about 205°C.

Preferably, the polyurethane elastomer and oxymethylene polymer are dried (either alone or together) before being subjected to the intimate blending procedure. The drying can be done in desiccated air having a dew point of about -30°C to -40°C or lower, at a temperature of from about 70°C to about ll0°C, and preferably above 80°C. The drying can also be accomplished in a vacuum oven, for example, at a temperature above about 90°C. The drying time will depend primarily on the moisture content, drying temperature, and particular equipment employed, but typically is from about 2 to about 6 hours or more. If the drying is conducted for longer periods of time, such as overnight, the drying temperature should preferably be about 70°C to about 85°C. In general, any conventional drying procedure can be used to reduce the moisture content to below about 0.l weight percent, based on the total weight of the polyurethane and oxymethylene polymer, preferably below about 0.05 weight percent, and most preferably below about 0.01 weight percent or lower. As is well known to those skilled in the art, water will react with polyurethanes upon processing the polyurethanes at elevated temperatures.

The oxymethylene molding composition resulting from the intimate blending procedure is then comminuted mechanically, for example by chopping, pelletizing or grinding, into granules, pellets, chips, flakes or powders, and processed in the thermoplastic state, for example by injection molding or extrusion molding, into shaped articles, for example, bars, rods, plates, sheets, films, ribbons, tubes and the like.

Preferably, the comminuted oxymethylene molding composition is dried (as discussed above) prior to being molded.

POLYDIORGANOSILOXANE

The polydiorganosiloxane polymers useful as additives to the high impact polyacetal of this invention will have the following structural formula:

$R'_3Si[OSi(R'')_2]_nOSiR'''_3$

wherein R', R'', R''' can be the same or different and selected from alkyl, phenyl, or substituted phenyl and n is an integer from l to l00. Viscosity of the polydiorganosiloxane may range from about l,000 to l00,000 centistokes at 77°F (25°C). The preferred polydiorganosiloxane is polydimethylsiloxane. The polydiorganosiloxane polymer may be present in amounts of about 0.5-l0% and preferably from about l% to about 3% by weight of the high impact polyacetal resin composition.

The polydiorganosiloxane is preferably added to the composition in liquid form either as a fluid or from a melt and blended with the oxymethylene polymer and elastomeric polyurethane dry or melt blend as described previously.

The following example illustrates the improvement in wear properties which is obtained by incorporating the additives of the present invention into polyoxymethylene polymers. The invention is not to be construed as being strictly limited to the embodiments shown in the examples.

EXAMPLE

The comparative wear properties of an acetal copolymer (Celcon M90, an oxymethylene copolymer having a melt index of 9.0g/l0 min. manufactured by Celanese Corporation) were compared with the wear properties of the same copolymer containing (l) l0 wt.% polyester based polyurethane; (2) 2 wt. % dimethylsiloxane having a viscosity of about 60,000 centistokes; and (3) l0 wt. % polyester based polyurethane and 2 wt. % of polydimethylsiloxane used in comparative sample 2.

A time to wear study for molded articles formed from the four polymer compositions against steel at 50 psi and 300 fpm (feet per minute) was conducted an a Falex multi-specimen test machine manufactured by the Falex Corporation of Aurora, Ill. The machine is a thrust washer configuration in which the polymers were injection molded into wear disks and rotated against a wear base of Cl0l8 carbon steel RC30. The test is an accelerated short term wear test which measures the relative time required to fail wear specimens. The results are summarized in Figure l.

As can be seen from Figure 1. the incorporation of the polyurethane into the oxymethylene copolymer substantially reduces the interfacial wear properties of the oxymethylene polymer.

The addition of the 2% by weight dimethylsiloxane improves the wear properties of the oxymethylene polymer by a factor of six failing after 60 minutes

compared to 10 minutes for the POM polymer.

A molded article formed from the composition of the present invention containing polyurethane and the polydiorganosiloxane shows a twelve fold improvement in interfacial wear (60 min) relative to the POM/PU blend (5 min.) Thus, even though the composition contains the elastomeric polyurethane impact modifier, the wear properties of the composition are unexpectedly at least equivalent to the wear properties of the improved wear POM composition without the polyurethane additive.

## Claims

I. A low wear, high impact strength polyacetal resin composition comprising an oxymethylene polymer containing effective amounts of an elastomeric polyurethane to increase the impact strength of said oxymethylene polymer and a polydiorganosiloxane so as to increase the wear properties of said high impact strength polymer.

2. The low wear polyacetal resin composition of claim I wherein said polyurethane is present in amounts of about 1 to about 50% by weight based on the blend of said polyurethane and said oxymethylene polymer.

3. The low wear polyacetal resin composition of claim I wherein said polydiorganosiloxane is present in amounts of about 0.5% to I0% by weight based upon the total weight of the composition.

4. The low wear polyacetal resin composition of claim 2 wherein said polydiorganosiloxane is present in amounts of about 0.5% to I0% by weight based upon the total weight of the composition.

5. The low wear polyacetal resin composition of claim I wherein the oxymethylene polymer is selected from the group consisting of:

(i) oxymethylene homopolymer,

(ii) oxymethylene copolymer comprising about 85 to about 99.9 percent recurring $-OCH_2-$ groups interspersed with groups of the formula:

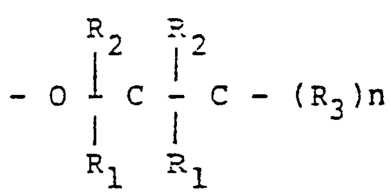

wherein each $R_1$ and $R_2$ is selected from the group consisting of hydrogen, lower alkyl and halogen-substituted lower alkyl radicals, each $R_3$ is selected from the group consisting of methylene, oxymethylene, lower alkyl and halo-alkyl-substituted methylene, and lower alkyl and haloalkyl-substituted oxymthylene radicals and n is an integer from 0 to 3, inclusive, each lower alkyl radical having from I to 2 carbon atoms, inclusive, said copolymer having a number average molecular weight of at least I0,000 and a melting point of at least I50° C, and

(iii) oxymethylene terpolymer, which is the reaction product of trioxane, a cyclic ether and/or cyclic acetal, and a diglycide of the formula:

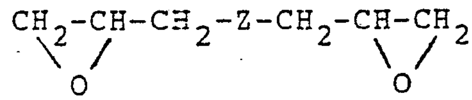

wherein Z is selected from the group consisting of a carbon-to-carbon bond, oxygen, an oxyalkoxy of I to 8 carbon atoms, and an oxypoly (lower alkoxy).

6. The low wear polyacetal resin composition of claim 5 wherein said oxymethylene polymer is said oxymethylene copolymer.

7. A low wear, high impact polyacetal resin composition comprising an oxymethylene polymer containing effective amounts of an elastomeric polyurethane to improve the impact strength of said oxymethylene polymer and a polydiorganosiloxane having the structural formula:

$R'_3Si[OSi(R'')_2]_nOSiR'''_3$

wherein R′, R″, R‴ can be the same or different and selected from alkyl, phenyl, or substituted phenyl and n is an integer from I to I00; and said polydiorganosiloxane has a viscosity of from about I,000 to I00,000 centistokes at 77° F, so as to increase the wear properties of said high impact polymer.

8. The low wear polyacetal resin composition of claim 7 wherein said polyurethane is present in amounts of about 1 to about 50% by weight based on the blend of said oxymethylene polymer and said polyurethane.

9. The low wear polyacetal resin composition of claim 7 wherein said polyurethane is present in amounts of about 10 to about 50% by weight based on the blend of said polyurethane and said oxymethylene polymer.

I0. The low wear polyacetal resin composition of claim 7 wherein said polyurethane is present in amounts of about 20 to about 40% by weight based on the blend of said polyurethane and said oxymethylene polymer.

II. The low wear polyacetal resin composition of claim 7 wherein said polydiorganosiloxane is present in amounts of about I to about I0% by weight of the total composition.

I2. The low wear polyacetal resin composition of claim II wherein said polydiorganosiloxane is present in amounts of about I to about 3 weight % based on the total weight of said resin composition.

I3. The low wear polyacetal resin composition

of claim 7 wherein said polydiorganosiloxane is polydimethylsiloxane.

14. The low wear polyacetal resin composition of claim 11 wherein said polydiorganosiloxane is polydimethylsiloxane.

15. The low wear polyacetal resin composition of claim 12 wherein said polydiorganosiloxane is polydimethylsiloxane.

16. The low wear polyacetal resin composition of claim 15 wherein said oxymethylene polymer is said oxymethylene copolymer.

17. A molded article formed from the composition of claim 1.

18. A molded article formed from the composition of claim 5.

19. A molded article formed from the composition of claim 7.

20. A molded article formed from the composition of claim 15.

0247870

Fig.1

TIME TO WEAR FAILURE AGAINST STEEL AT 50 PSI AND 300 FPM

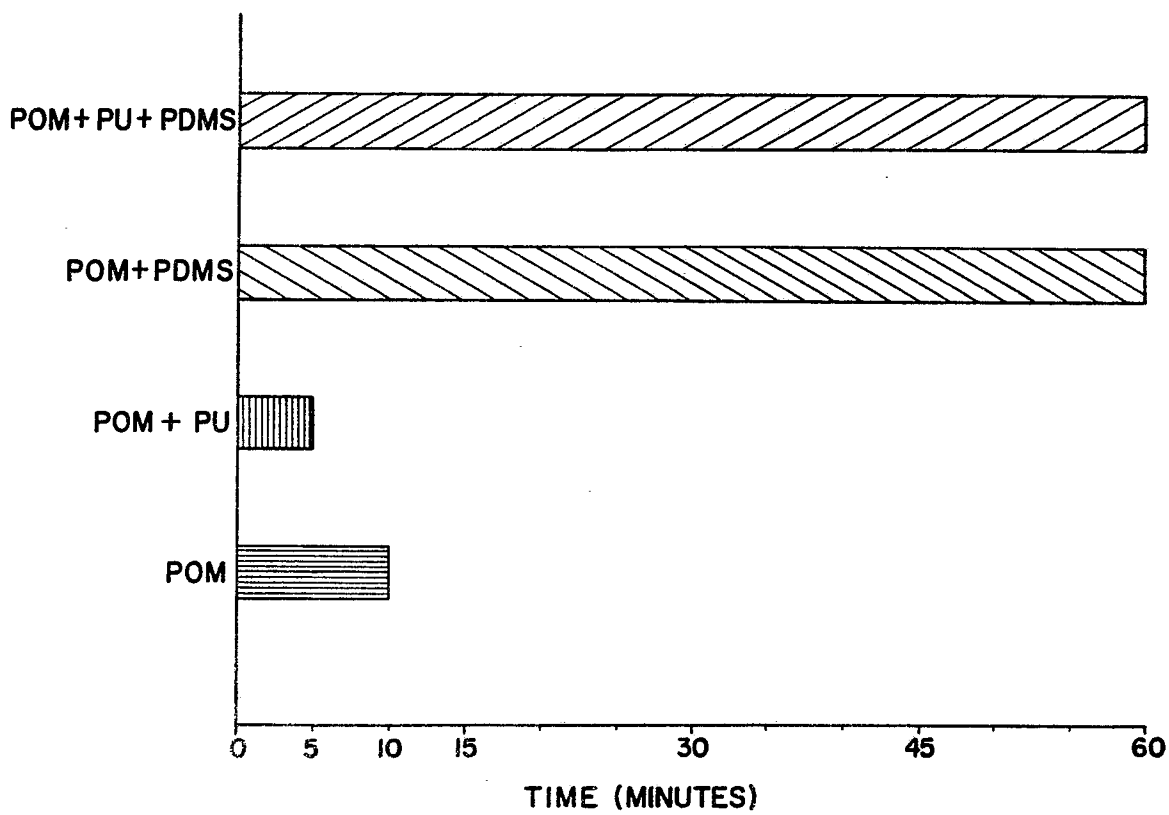

European Patent Office

# EUROPEAN SEARCH REPORT

Application number
EP 87 30 4724

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 167 369 (CELANESE)<br>* claims 1-4, 13, 14 *<br>--- | 1,2,5-10,16 | C 08 L 59/04<br>C 08 L 75/04 |
| A,D | US-A-3 491 048 (D.E. SARGENT)<br>* column 1, lines 55-73; column 2, lines 1-52; column 3, lines 51-56; column 4, lines 2-7 *<br>--- | 1,3-7,11,13-16 | |
| A | EP-A-0 115 846 (HOECHST)<br>* claim 1; page 2, lines 11-18 *<br>--- | 1,2,5-10,16 | |
| A | GB-A- 964 550 (KURASHIKI RAYON)<br>* claims 1, 3 *<br>--- | 1,2,5,7,8 | TECHNICAL FIELDS SEARCHED (Int. Cl.4) |
| A,D | US-A-3 027 352 (C.T. WALLING et al.)<br>* claims *<br>----- | 5 | C 08 L 59/00<br>C 08 L 75/00 |

The present search report has been drawn up for all claims

| Place of search | Date of completion of the search | Examiner |
|---|---|---|
| BERLIN | 19-08-1987 | BOEKER R.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82